# EUROPEAN PATENT APPLICATION

(11) **EP 1 424 638 A2**
(43) Date of publication of application: **02.06.2004**
(21) Application number: 03020099.2
(22) Date of filing: 04.09.2003
(51) Int. Cl.: G06F 17/30

(54) **System, method, and apparatus for sharing revision control databases**

(30) Priority: 05.09.2002 US 235768
(71) Applicant: Broadcom Corporation, Irvine, California 92618-7013 (US)
(72) Inventor: Bowers, Heather, Campbell, CA 95008 (US); Huang, Frank, Sunnyvale California (US); Sweet, Jim, Sunnyvale California (US)
(74) Representative: Jehle, Volker Armin, Dipl.-Ing.

(57) **Abstract**

A system, method, and apparatus for sharing revision control databases is presented herein. Access to files in a first repository is provided to a group of users associated with the second repository by placement of a link in the second repository. The link in the second repository points to a shared files subdirectory in the first repository. The users associated with the second repository access files in the shared files subdirectory by accessing the second repository and selecting the link.

## Description

### BACKGROUND OF THE INVENTION

The present invention is related to computer systems, and more particularly to management of shared files among multiple users.

Electronic documents are often the work products of multiple persons. For example, software source code is often written in a shared document by multiple programmers. Sharing a writable document among multiple users raises the possibility of conflicting modifications to the document. Conflicting modifications to a document can arise when both users make significant edits to the same portion of the document.

The users of a shared document usually form a unit or team within a larger organization which is responsible for a particular project, such as development of a software product. It is therefore common for the larger organization to associate a project file with the project. The project file is a central repository of material pertinent to the project that typically includes memoranda, plans, technical reports, and other pertinent information. In the case where the project involves development of a software product, the repository may include the software source code as the code is written. The foregoing elements in the repository are usually shared among the project users and subject to the aforementioned change conflicts.

Some operating systems include a revision control system. A revision control system is a system that manages potential conflicts to shared documents. Examples of revision control systems include the UNIX Revision Control System (RCS), the distributed RCS (dRCS), and the linked RCS (IRCS). The revision control system manages conflicts to the shared documents by placing the shared documents in the repository. A repository is a directory structure that stores the files' contents and revision information. Users can review and edit the shared document by "checking out" the document form the repository. The edits are saved by making the edits to the document and "checking in" the document to the repository. The user can then have the changes committed to the document.

The revision control system incorporates changes to shared documents by storing revision information in what are known as delta files. The delta files store the changes to the document, as opposed to the document as it appears after the changes. Storage of changes in the form of delta files allows construction of the document at any stage in the document's development.

Access to the repository is based on association with a project group. The members of project groups are given access to a repository containing files associated with the project. However, if a file is checked into the repository for one project, it is not easily used, modified, and tracked by people working on other projects. The primary reason for this is that a single user can only be pointing to one repository at a time, normally the one for the project which the user is working on.

Accessing files from another repository requires a different work area and different repository pointers. Files would have to be copied manually back and forth between work areas. The foregoing is inconvenient, time consuming, and very error prone.

Further limitations and disadvantages of convention and traditional approaches will become apparent to one of skill in the art, through comparison of such systems with embodiments of the present invention as set forth in the remainder of the present application with reference to the drawings.

### BRIEF SUMMARY OF THE INVENTION

A system, method, and apparatus are presented herein for sharing revision control databases. Revision control databases are shared by placement of a symbolic link in a repository directory structure. The symbolic link in the repository directory structure points to a directory associated with another project that actually resides in another repository. The symbolic link permits persons who work in one project to seamlessly access files in a shared file directory. Additionally, all standard revision control commands work on the shared files as if the revision control commands came from a user in the same project.

These and other advantages and novel features of the present invention, as well as details of an illustrated embodiment thereof, will be more fully understood from the following description and drawings.

### BRIEF DESCRIPTION OF SEVERAL VIEWS OF THE DRAWINGS

**FIGURE 1** is a block diagram of an exemplary computer system wherein the present invention can be practiced;
**FIGURE 2** is an exemplary computer network wherein the present invention can be practiced;
**FIGURE 3** is an exemplary repository structure in accordance with an embodiment of the invention; and
**FIGURE 4** is a flow diagram describing the configuration of a computer network in accordance with the present invention.

### DETAILED DESCRIPTION OF THE INVENTION

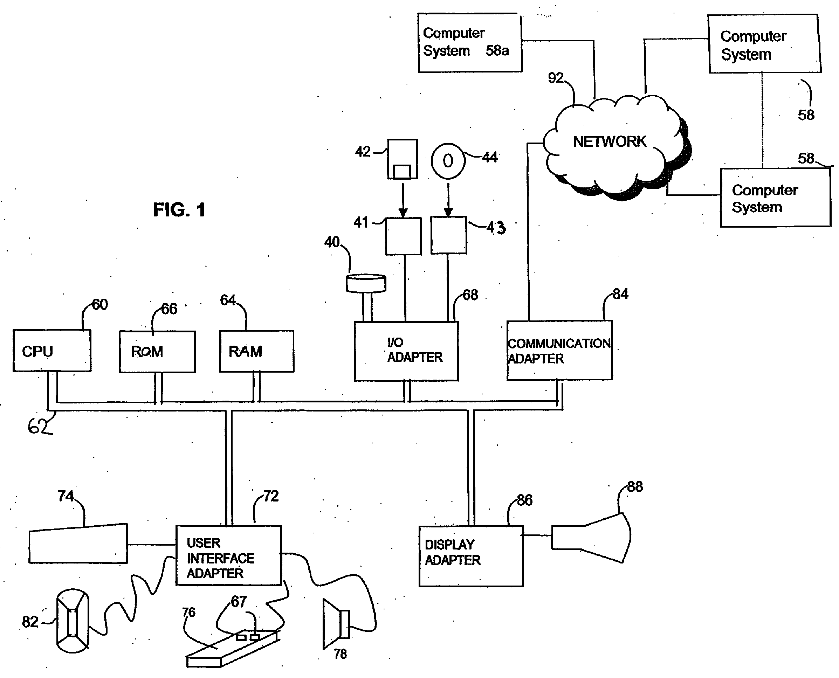

Referring now to **FIGURE 1**, a representative hardware environment for a computer system 58 for practicing the present invention is depicted. A CPU 60 is interconnected via system bus 62 to random access memory (RAM) 64, read only memory (ROM) 66, an input/output (I/O) adapter 68, a user interface adapter 72, a communications adapter 84, and a display adapter 86. The input/output (I/O) adapter 68 connects peripheral devices such as hard disc drives 40, floppy disc drives 41 for reading removable floppy discs 42, and optical disc drives 43 for reading removable optical disc 44 (such as a compact disc or a digital versatile disc) to the bus 62. The user interface adapter 72 connects devices such as a keyboard 74, a mouse 76 having a plurality of buttons 67, a speaker 78, a microphone 82, and/or other user interfaces devices such as a touch screen device (not shown) to the bus 62. The communications adapter 84 connects the computer system to a network 92. The display adapter 86 connects a monitor 88 to the bus 62.

The network 92 connects the computer system 58 to other computers systems 58. The computer network 92 can comprise, for example, a local area network (LAN), a wide area network (WAN), or the internet. Additionally, a particular one of the computer systems 58A can act as a server. A computer server 58A centralizes files and functions and provides access to the files and functions to the other computer systems 58 within the network 92.

An embodiment of the present invention can be implemented as sets of instructions resident in the random access memory 64 of one or more computer systems 58 configured generally as described in FIGURE 1. Until required by the computer system 58, the set of instructions may be stored in another computer readable memory, for example in a hard disc drive 40, or in removable memory such as an optical disc 44 for eventual use in an optical disc drive 43, or a floppy disc 42 for eventual use in a floppy disc drive 41.

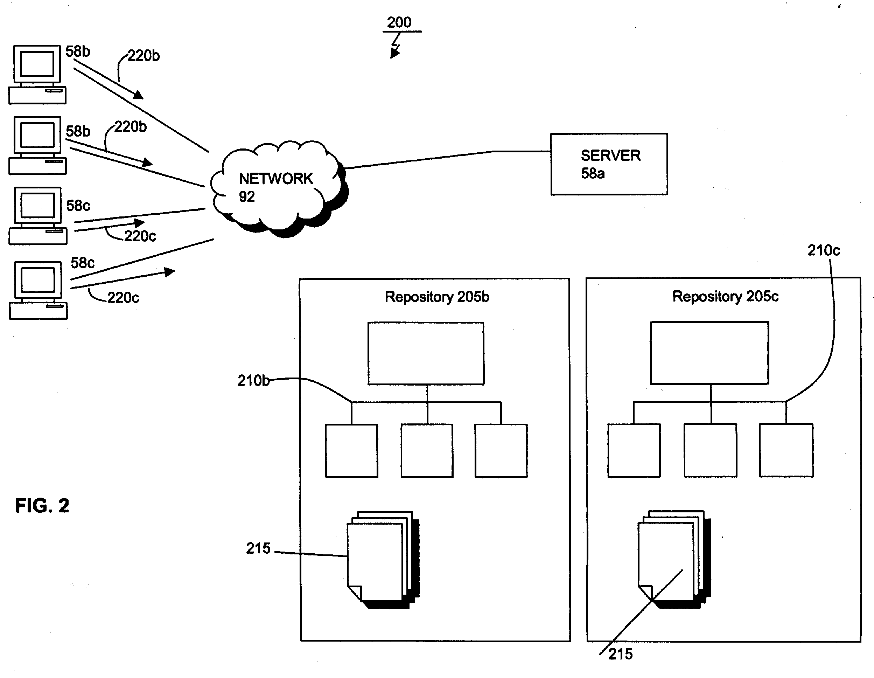

Referring now to **FIGURE 2**, there is illustrated a block diagram of an exemplary computer network 200 wherein the present invention can be practiced. The computer network 200 includes a plurality of computer systems 58, and at least one server 58A, interconnected by network 92. The server 58A centralizes various network resources including hardware, software, and data. Data resources can be centralized by storage of the data at the server 58A. The data can include electronic documents or files, including electronic documents which are written to by multiple users.

The computer systems 58 access the network resources by communicating to the server 58A using what is known as a client/server connection. A computer system 58 accessing network resources from a server 58A is referred to as a client. Each client 58 is generally associated with a particular user, although it is possible for users to utilize other clients 58.

The users are associated with a large organization such as a business, wherein the users are generally the employees of the business, as well as any other number of project groups, each of which form a portion of the larger organization. The project groups are associated with a particular project that represents a discrete endeavor, for example, development of a software product.

Project groups often generate a number of documents which are written to by more than one of the users associated with the project group. Accordingly, repositories 205b, 205c are created for each of the project groups. The repositories 205 are placed at the server 58a and include directory structures 210b, 210c wherein the documents 215 that are associated with the group are stored. In the present exemplary illustration, the clients 58b and repository 205b are associated with one project and the clients 58c and repository 205c are associated with another project.

The server 58a provides access to the repositories 205b for clients 58b and to the repository 205c for clients 58c. As noted above, each client 58 is generally associated with a particular user. Each of the clients 58 associated with users in a particular project group includes pointer 220 pointing to the repository associated with the project group. A user at a particular client 58, e.g., client 58b, accesses the documents 21 5 for their project group by accessing the repository, e.g., repository 205b, associated with the project group.

Additionally, a user at a client associated with one project group, e.g., client 58c, can access a file 215 associated with a different project group by accessing the repository 205c associated with the user's group. The repository 205c includes a link which provides access to the repository, e.g., repository 205b, wherein the file 215 is stored. The link can be, for example, a UNIX symbolic link, a pointer, or a shortcut.

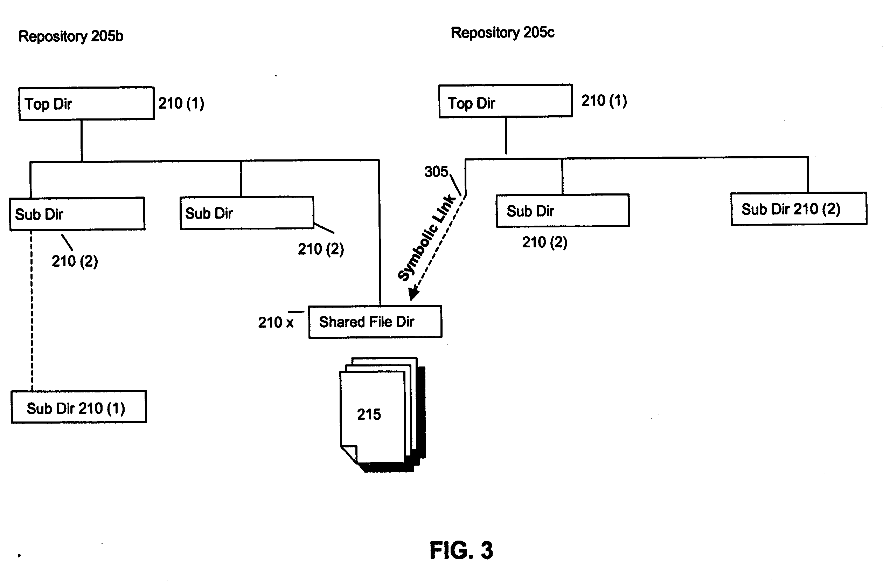

Referring now to **FIGURE 3,** there is illustrated a block diagram of an exemplary directory structure wherein users associated with repository 205c can access files 215 from repository 205b. Each repository 205 includes a directory structure 210. The directory structure includes a top directory 210(1 ) and any number of subdirectories 210(2). Each directory 210(1 ) and subdirectory 210(2) can include objects 215, such as files 215, as well as other subdirectories 210(n) resulting in any number, n, of directory levels.

Repository 205b also includes a shared files subdirectory 21 0x. The shared files subdirectory 210x includes files 215 for which access by users of other project groups is granted. The top directory 210(1 ) of repository 205c also includes a link, such as a symbolic link 305. Although a symbolic link 305 is used in the present embodiment, it is noted that other links, such as a pointer, or shortcut can also be used.

The symbolic link 305 points to the shared files subdirectory 210x. A client 58c with a pointer pointing to repository 205c can seamlessly access files in shared files 215 subdirectory 210x by accessing repository 205c and selecting symbolic link 305. All standard revision control commands work on shared files 215 as if the files 215 were in repository 205c. It is noted that although in the present embodiment the symbolic link 305 is placed in the top directory, the symbolic link 305 can be placed in any of the subdirectories as well. The symbolic link is preferably manually added directly to the repository 205c as opposed to created at client 205c and checked into the repository 205c.

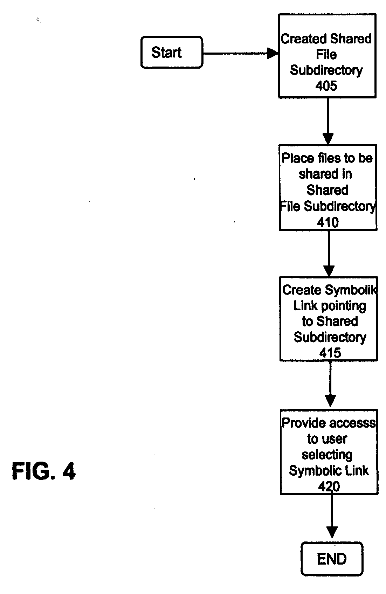

Referring now to **FIGURE 4,** there is illustrated a flow diagram describing the configuration of a computer network in accordance with the present invention. At 405, a shared file subdirectory 210(1)b is created. Each file 215 for which shared access is desired is placed in the shared file subdirectory 210(1 )b (410). At 415, a symbolic link pointing to the shared file subdirectory 210(1 )b is manually placed in the repository 205c associated with the users in a project group to which access to files 215 is to be provided. At 420, one or more users accesses the files 215 in shared file subdirectory 210(1 )(b) of repository 205b by selecting the symbolic link in repository 205c.

Those skilled in the art will recognize that the foregoing allow users of a first project group to access files of a second project group in a seamless manner. The files of the second group appear to users in the first project group like other files in the first project group. At the same time, the files of the second project group do not appear to be shared with the first project group.

While the invention has been described with reference to certain embodiments, it will be understood by those skilled in the art that various changes may be made and equivalents may be substituted without departing from the scope of the invention. In addition, many modifications may be made to adapt particular situation or material to the teachings of the invention without departing from its scope. For example, the flow diagram of FIGURE 4 can be implemented as a series of instructions residing in a memory for execution by a processor. Therefore, it is intended that the invention not be limited to the particular embodiment(s) disclosed, but that the invention will include all embodiments falling within the scope of the appended claims.

## Claims

1. A method for providing access to files, said method comprising:
creating a shared files subdirectory in a first repository; and
placing a link in a second repository, wherein the link in the second repository points to the shared files subdirectory in the first repository.

2. The method of claim 1, further comprising:
placing one or more files in said shared files subdirectory in the repository.

3. The method of claim 2, further comprising:
receiving a selection of the symbolic link at a client, wherein the includes a pointer pointing to the second repository; and
providing access to the files in the shared files subdirectory, responsive to selection of the symbolic link at the client.

4. The method of claim 1, wherein placing the link in the second repository further comprises:
accessing the second repository; and
creating the link while accessing the second repository.

5. The method of claim 1, wherein placing the link in the second repository further comprises:
placing a symbolic link in the second repository, wherein the shortcut points to the shared files subdirectory of the first repository.

6. The method of claim 1, wherein placing the link in the second repository further comprises:
placing a pointer in the second repository wherein the pointer points to the shared files subdirectory of the first repository.

7. A server for providing access to files, said server comprising:
a first repository; and
a second repository including a symbolic link pointing to the first repository.

8. The server of claim 7, wherein the first repository further comprises:
a shared files subdirectory including one or more files; and
wherein the link in the second repository, in the second repository points to the shared files subdirectory in the first repository.

9. The server of claim 7, wherein the link in the second repository further comprises a shortcut, wherein the shortcut points to the shared files subdirectory of the first repository.

10. The server of claim 7, wherein the link in the second repository further comprises a pointer, wherein the pointer points to the shared files subdirectory of the first repository.

11. A computer network, said computer network comprising:
a first plurality of clients for accessing a first plurality of files;
a first repository for storing the first plurality of files;
a second plurality of clients for accessing a second plurality of files;
a second repository for storing the second plurality of files;
a link in the second repository for pointing to the first repository.

12. The computer network of claim 11, wherein the first repository further comprises a shared files folder for storing at least one of the first plurality of files, and wherein the link in the second repository points to the shared files folder.

13. The computer network of claim 12, further comprising:
a server for providing access to the first repository to the first plurality of clients and for providing access to the second repository to the second plurality of clients.

14. The computer network of claim 13, wherein the server provides access to the at least one of the first plurality of files to one of the second plurality of clients, responsive to receiving a selection of the link from the one of the second plurality of clients.

15. The computer network of claim 11, wherein the link further comprises a symbolic link.

16. The computer network of claim 11, wherein the link further comprises a pointer.
